(19) Europäisches Patentamt
European Patent Office
Office européen des brevets

(11) **EP 2 184 616 B1**

(12) **EUROPÄISCHE PATENTSCHRIFT**

(45) Veröffentlichungstag und Bekanntmachung des Hinweises auf die Patenterteilung:
**30.03.2016  Patentblatt 2016/13**

(51) Int Cl.:
*G01S 7/497* *(2006.01)*     *G01S 17/93* *(2006.01)*

(21) Anmeldenummer: **09170903.0**

(22) Anmeldetag: **22.09.2009**

(54) **Verfahren und Einrichtung für die Steuerung einer Strahlungsquelle**

Method and device for controlling a radiation source

Procédé et dispositif destinés à la commande d'une source de rayonnement

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **05.11.2008  DE 102008043481**

(43) Veröffentlichungstag der Anmeldung:
**12.05.2010  Patentblatt 2010/19**

(73) Patentinhaber: **Robert Bosch GmbH**
**70442 Stuttgart (DE)**

(72) Erfinder:
• **Fiess, Reinhold**
**77770, Durbach (DE)**
• **Steinkogler, Sascha**
**79106, Freiburg (DE)**

(56) Entgegenhaltungen:
**WO-A1-2005/029125     DE-A1- 19 707 936**

EP 2 184 616 B1

**Beschreibung**

Die vorliegende Erfindung betrifft ein Verfahren für die Steuerung einer fahrzeuggebundenen Strahlungsquelle nach dem Oberbegriff des Anspruchs 1, wie aus der DE 197 07 936 A1 bekannt. Weiterhin betrifft die Erfindung eine Vorrichtung für die Steuerung einer Fahrzeuggebundenen Strahlungsquelle.

Die WO 2005/029 125 A1 beschreibt eine Vorrichtung und ein Verfahren für die Steuerung einer fahrzeuggebundenen Strahlungsquelle, wobei wenigstens ein Sensor des Kraftfahrzeugs wenigstens einen Teil des Beleuchtungsbereichs der Lichtquelle auf die Anwesenheit von wenigstens einem Objekt überwacht, wobei der Sensor in Abhängigkeit des wenigstens einen anwesenden Objekt Sensorsignale erzeugt, und wobei die Lichtquelle in Abhängigkeit der Sensorsignale derart eingestellt wird, das die räumliche und/oder zeitliche Bestrahlung des wenigstens einen anwesenden Objektes zumindest mit Licht mit Wellenlängen außerhalb des sichtbaren Spektrums der Lichtquelle kleiner als ein vorgebbarerer erster Grenzwert ist.

Als Strahlungsquelle im Sinne der Erfindung kommt insbesondere ein so genannter Laser-Imager in Betracht. Laser-Imager werden häufig in Fahrerassistenzsystemen eingesetzt, um das Fahrzeugumfeld zu erfassen. Das Fahrzeugumfeld wird dabei durch den Laser-Imager mit dem so genannten Flying-Spot-Verfahren abgetastet. Dabei wird mit mindestens einem, beispielsweise rasterförmig abgelenkten Laserstrahl, die Umgebung im Wesentlichen punktförmig bestrahlt. Aus der von Objekten reflektierten und/oder gestreuten Laserstrahlung wird ein Abbild der Umgebung ermittelt. Zusätzlich kann mittels gepulster Laserstrahlung in Verbindung mit einer Laufzeitmessung auch die Entfernung von Objekten ermittelt werden. Insgesamt ist auf diese Weise eine dreidimensionale Erfassung des Fahrzeugumfelds möglich. Üblicherweise wird der Laserstrahl unter Verwendung mindestens eines horizontal und vertikal schwingenden mikromechanischen Spiegels (MEMS-Spiegel) in zwei Dimensionen abgelenkt. Die an Objekten im Fahrzeugumfeld reflektierte und gestreute Strahlung wird beispielsweise über eine Empfängeroptik einem Strahlungsdetektor zugeführt, dessen Ausgangssignal zum Zwecke der Bilderfassung weiterverarbeitet wird. Das Signal am Detektor hängt im einfachsten Fall invers proportional von der Entfernung des detektierten Objekts ab. Eine größere Reichweite kann demzufolge durch eine quadratische Steigerung der Laserpulsleistung des Laser-Imagers erreicht werden. Wird eine derartige Lasereinrichtung (MEMS-Laser-Imager), beispielsweise als Komponente eines Fahrerassistenzsystems, im öffentlichen Bereich eingesetzt, so muss das System so ausgelegt werden, dass bestehende Vorschriften für die Augensicherheit (insbesondere DIN 60825-1) eingehalten werden. Diese Vorschrift setzt nun der Laserpulsleistung und somit der maximal erzielbaren Reichweite eine Grenze.

Aus EP 1 704 072 B1 sind ein Verfahren und eine Vorrichtung zur Steuerung einer Strahlungsquelle bekannt, wobei wenigstens eine Strahlungsquelle einen Beleuchtungsbereich beleuchtet, wobei wenigstens ein Sensor wenigstens einen Teil des Beleuchtungsbereichs der Strahlungsquelle auf die Anwesenheit von wenigstens einem Objekt überwacht und in Abhängigkeit des wenigstens einen anwesenden Objekts Sensorsignale erzeugt, wobei die Strahlungsquelle in Abhängigkeit der Sensorsignale abgeschaltet und/oder in ihrer Strahlungsintensität verringert wird. Dabei wird die Strahlungsquelle deaktiviert, wenn der Abstand zu dem erkannten Objekt einen Grenzwert unterschreitet, und/oder aus dem Sensorsignal die Annäherung an ein Objekt ermittelt wird und die Abschaltung bzw. Regelung der Strahlungsquelle abhängig von der Annäherung an das Objekt erfolgt.

Offenbarung der Erfindung

Der Erfindung liegt die Aufgabe zugrunde, ein mit einem Laser-Imager ausgestattetes Fahrerassistenzsystem, bei dem der Laser-Imager das Fahrzeugumfeld im Flying-Spot-Verfahren abtastet, dahingehend weiterzuentwickeln, dass eine möglichst hohe Erfassungsreichweite bei Einhaltung der vorschriftsmäßigen Augensicherheit erreicht wird.

Diese Aufgabe wird durch das in Anspruch 1 genannte Verfahren für die Steuerung einer Strahlungsquelle gelöst. Die Erfindung geht von der Erkenntnis aus, dass dieses Ziel durch eine von Betriebsparametern des Fahrzeugs abhängige Steuerung der Betriebsparameter der Strahlungsquelle erreichbar ist. So können Betriebsparameter der Strahlungsquelle vorteilhaft in Abhängigkeit von der Geschwindigkeit des Fahrzeugs gesteuert werden. Beispielsweise derart, dass die Pulsleistung des als Strahlungsquelle vorgesehenen Laser-Imagers mit zunehmender Geschwindigkeit erhöht und mit abnehmender Geschwindigkeit vermindert wird. Die Variation der Pulsleistung kann dabei stetig erfolgen oder aber auch sprungförmig in Abhängigkeit von vorgebbaren Schwellwerten der Geschwindigkeit. Gemäß der Erfindung wird das von dem Laser-Imager erfasst Blickfeld verändert, um das Risiko einer übermäßigen Strahlungsbelastung zu verringern und die Grenzwerte für die Augensicherheit einzuhalten. So kann beispielsweise mit abnehmender Geschwindigkeit bei gleicher Pulsleistung das von dem Laser-Imager erfasste Blickfeld vergrößert werden. Alternativ können, bei abnehmender Geschwindigkeit, die Pulsleistung vermindert und das Blickfeld aufgeweitet werden. Besonders vorteilhaft wird das Blickfeld des Laser-Imagers auf die Anwesenheit von Personen überprüft. Die beispielhaft genannten Maßnahmen werden erst bei Detektion einer Person in dem Blickfeld durchgeführt. Auf diese Weise kann der Laser-Imager mit einer höchstmöglichen Pulsleistung betrieben werden, wenn kein Risiko für eine Augenschädigung besteht.

Eine erfindungsgemäße Vorrichtung für die Steuerung eines Laser-Imagers geht aus dem Anspruch 18 hervor.

Ausführungsbeispiele der Erfindung werden im Folgenden unter Bezug auf die Zeichnung näher erläutert. Dabei zeigt

Figur 1     den prinzipiellen Aufbau einer Messeinrichtung für die Prüfung der Augensicherheit;

Figur 2     die Darstellung von zeitlichen Kenngrößen bei der Steuerung eines Laser-Imagers nach dem Flying-Spot-Verfahren;

Figur 3     in einem ersten Diagramm die Darstellung des während eines Bildaufbaus durch eine Messblende hindurch tretenden Strahlungsanteils;

Figur 4     in einem zweiten Diagramm die Darstellung des während eines Zeilenaufbaus durch die Messblende hindurch tretenden Strahlungsanteils;

Figur 5     in einem dritten Diagramm die Darstellung des während eines Passierens der Messblende durch diese hindurch tretenden Strahlungsanteils.

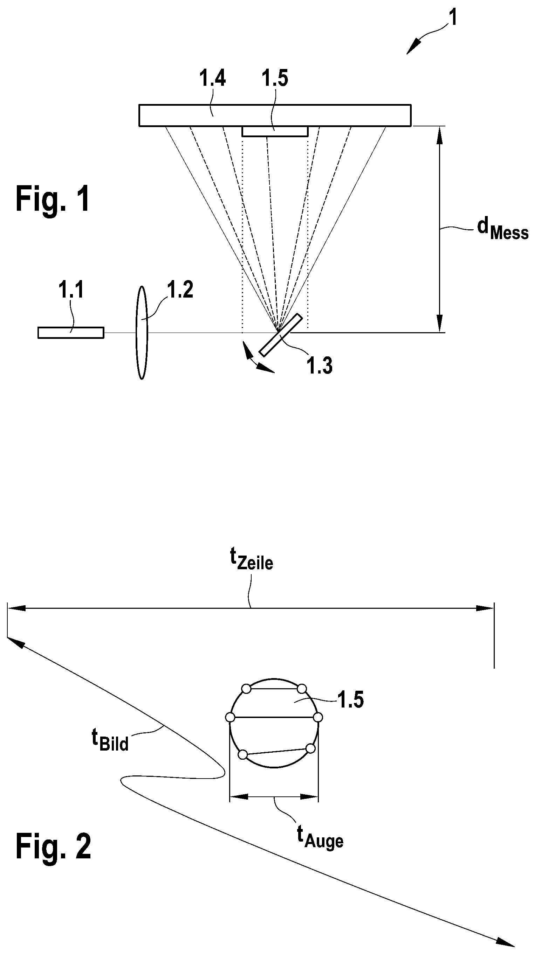

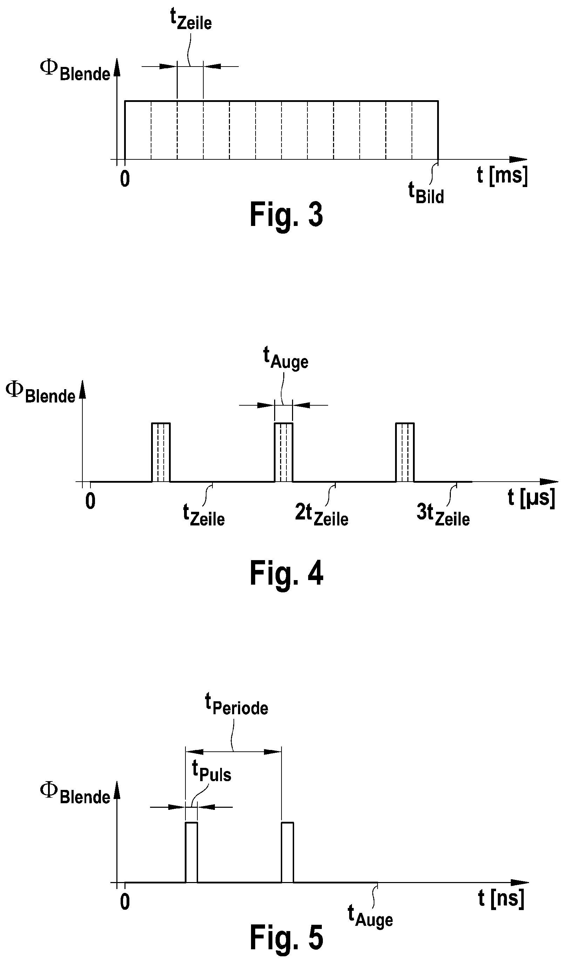

Die Augensicherheit eines von einem beispielsweise von einem Laser-Imager erzeugten Laserpuls getroffenen Auges kann im Wesentlichen dadurch gewährleistet werden, dass die dem Auge zugeführte Strahlungsenergie auf ein zulässiges Maß begrenzt wird. Die Energie, die ein Laser-Imager in ein von dem Laserstrahl getroffenes Auge einkoppeln kann, wird anhand des in Figur 1 beispielhaft dargestellten Messaufbaus erläutert. Zusätzlich wird, unter Bezug auf Figur 2, das bei einem Laser-Imager üblicherweise eingesetzte Flying-Spot-Verfahren erläutert. Die Darstellungen in Figur 3, Figur 4 und Figur 5 verdeutlichen die auf eine Blende auftreffende Pulsfolge, wobei die Blende das Auge einer von dem Laserstrahl getroffenen Person repräsentiert.

Der in Figur 1 dargestellte Messaufbau 1 umfasst einen Laser 1.1, eine in Strahlausbreitungsrichtung folgende Laseroptik 1.2 und mindestens einen MEMS-Spiegel 1.3 für die Ablenkung des auf ihn auftreffenden Laserstrahls. Der von dem MEMS-Spiegel 1.3 abgelenkte Laserstrahl trifft auf ein im Abstand $d_{Mess}$ von dem MEMS-Spiegel angeordnetes Target 1.4. Die Messblende 1.5 nimmt einen kleinen Bereich des Targets 1.4 ein.

Das in Figur 2 dargestellte Diagramm zeigt den "Footprint" des in einem Flying-Spot-Verfahren von dem mindestens einen MEMS-Spiegel 1.3 in zwei Dimensionen abgelenkten Laserstrahls auf der Oberfläche des Targets 1.4 bzw. in dem Bereich der Messblende 1.5. Unter "Footprint" sollen in diesem Zusammenhang die von dem Laserstrahl getroffenen Bereiche des Targets 1.4 und der Messblende 1.5 verstanden werden. Mit $t_{Zeile}$ ist die Zeitdauer gemeint, die der nach dem Flying-Spot-Verfahren Laserstrahl zum Abtasten einer Zeile eines Bildes benötigt. Mit $t_{Bild}$ ist die Zeitdauer für den Aufbau eines vollständigen Bildes des von dem Laserstrahl abgerasterten Targets bezeichnet. Mit $t_{Auge}$ ist die Zeit bezeichnet, die der Laserstrahl benötig, um die Messblende zu überstreichen. Aus dem Diagramm ist ersichtlich, dass nur ein Teil der auf das Target 1.4 auftreffenden Laserimpulse tatsächlich auch auf die Messblende 1.5 auftrifft.

Die zeitlichen Abhängigkeiten der in die Messblende eingekoppelten Laserstrahlung werden im Folgenden unter Bezug auf Figur 3, Figur 4 und Figur 5 erläutert. In Figur 3 ist dabei das Zeitintervall $t_{Bild}$ dargestellt, das der im Flying- Spot-Verfahren gesteuerte Laserstrahl für das Abrastern eines Bildbereichs benötigt. Das gesamte Zeitintervall setzt sich dabei aus Zeitschlitzen $t_{Zeile}$ zusammen, die der Laserstrahl jeweils zum Scannen einer Zeile benötigt. Figur 4 ist eine Darstellung mit einer höheren Auflösung auf der Zeitachse. Neben den Zeitschlitzen $t_{Zeile}$ sind jetzt Zeitintervalle $t_{Auge}$ zu erkennen. $t_{Auge}$ ist dabei das Zeitintervall, innerhalb dessen der Laserstrahl während eines Zeilenlaufs auf die ein Auge repräsentierende Messblende 1.5 auftrifft. Figur 5 ist eine Darstellung mit einer nochmals vergrößerten zeitlichen Auflösung. Innerhalb eines Zeitintervalls $t_{Auge}$ sind Zeitintervalle $t_{Puls}$ erkennbar, in denen der Laserstrahl aktiv gesteuert ist, die Messblende 1.5 also tatsächlich bestrahlt. Diese Zeitintervalle $t_{Puls}$ wiederholen sich mit der Periode $t_{Periode}$.

Bei Annahme zeitlich konstanter Pulsfolgen $t_{Puls}$ kann die durch die dem Auge entsprechende Messblende 1.5 hindurchtretende Energie wie folgt bestimmt und mit den in der Norm festgelegten zulässigen Grenzwerten verglichen werden:

$$(1) \quad E_{Auge} = \Phi_0 \frac{\pi}{32} \frac{\alpha_{Hori}}{\alpha_{res}} \frac{1}{f_{Spiegel}} \frac{t_{Puls}}{t_{Periode}} \frac{d^2_{Blende}}{d^2_{Mess} \cdot \tan^2(\alpha_{Hori}/2)} \frac{t_{Mess}}{t_{Bild}};$$

Hierin bedeuten:

$\alpha_{Hori}$ = horizontaler Blickwinkel

$\alpha_{res}$ = Winkelauflösung

$f_{Spiegel}$ = Schwingfrequenz des MEMS-Spiegels

$d^2_{Blende}$ = Durchmesser der Messblende 1.5

$d^2_{Mess}$ = Messabstand

$\Phi_0$ = Pulsleistung des Pulslasers

$t_{Mess}$ = Messzeit.

Aus der Beziehung (1) geht hervor, welche Parameter einen Einfluss auf die Augensicherheit haben können. Entsprechend kann, durch eine kontrollierte und situationsbedingte Anpassung dieser Parameter eine optimale Abstandsreichweite unter Einhaltung der notwendigen Augensicherheit erreicht werden.

Erfindungsgemäß kann die Augensicherheit insbesondere durch folgende Maßnahmen gewährleistet werden: adaptive Senkung der Pulsleistung des Lasers, Verlängerung der Pulswiederholrate, Verlängerung der Bildwiederholrate, Vergrößerung des Blickfeldes durch entsprechende Vergrößerung des horizontalen und/oder vertikalen Scanwinkels, notfalls Abschaltung der Strahlungsquelle. Auch sind Kombinationen der vorstehend genannten Maßnahmen denkbar. Dies wird im Folgenden anhand von Ausführungsbeispielen weiter erläutert. Die Erfindung geht hierbei von der Erkenntnis aus, dass eine Optimierung von Abstandsreichweite und Augensicherheit durch eine Verknüpfung der in der Beziehung (1) genannten Parameter mit Betriebskenngrößen des Fahrzeugs, mit Sensorsignalen und mit Kenngrößen des Fahrzeugumfelds erreichbar ist. Als Betriebskenngrößen des Fahrzeugs kommen dabei insbesondere die Eigengeschwindigkeit des Fahrzeugs, der Lenkwinkel, der Bremsstatus, der Beleuchtungszustand in Betracht. Als Sensorsignale kommen insbesondere Signale von Ultraschallsensoren einer Parkassistenzeinrichtung, Signale eines ESP-Steuergeräts über die Querbeschleunigung des Fahrzeugs und/oder Signale der Beschleunigungssensoren eines Rückhaltesystems in Betracht. Als Kenngrößen des Fahrzeugumfelds kommen insbesondere die Außentemperatur, der Zustand der Fahrbahnoberfläche, Witterungsbedingungen und dergleichen in Betracht. Die vorstehend genannten Größen sind nur beispielhaft erwähnt. Sie können unmittelbar an geeigneten Sensoren von ESP-, Airbag-, Navigations-, Body-, Motor-Steuergeräten erfasst und einem Steuergerät des Laser-Imagers zugeführt werden. Besonders vorteilhaft können die genannten Größen auch über einen digitalen BUS bereitgestellt werden.

Im Folgenden wird, beispielhaft, ein erstes einfaches Beispiel beschrieben. Bei dieser Variante ist eine von der Fahrzeuggeschwindigkeit abhängige Pulsleistung des Laser-Imagers vorgesehen. Die Fahrzeuggeschwindigkeit kann dabei vorteilhaft aus der Raddrehzahl ermittelt werden. Um eine Richtungsabhängigkeit zu erhalten, können zusätzlich noch Schwimmwinkel und Querbeschleunigung des Fahrzeugs berücksichtigt werden, die beispielsweise ein ESP-Steuergerät bereit stellt. In Formelschreibweise kann diese Abhängigkeit wie folgt dargestellt werden:

$$(2) \qquad \Phi_0 = f\left(\vec{v}_{Eigen}\right),$$

mit

$$\Phi_0 = \quad \text{Pulsleistung}$$

$$\left(\vec{v}_{Eigen}\right) = \text{Fahrzeuggeschwindigkeit.}$$

Für vorausschauende Systeme ist meistens anzunehmen, dass die für die jeweilige Funktion erforderliche Reichweite des Laser-Imagers mit abnehmender Geschwindigkeit abnimmt. Somit kann auch die Pulsleistung verringert werden. Bei einer niedrigen Fahrzeuggeschwindigkeit besteht allerdings auch eine größere-Wahrscheinlichkeit dafür, dass ein Beobachter der Laserstrahlung länger ausgesetzt ist. Dies trifft beispielsweise bei einem Einparkvorgang zu, bei dem die vorhandene Parklücke mit einem Laser-Imager erfasst wird. Durch eine von der Fahrzeuggeschwindigkeit abhängige Pulsleistung kann daher bei verringerter Geschwindigkeit, insbesondere auch bei erreichter niedriger Geschwindigkeit, die Pulsleistung reduziert werden. Die Pulsleistung kann dabei vorteilhaft stetig in Abhängigkeit von der Geschwindigkeit variiert werden. Alternativ ist auch eine sprunghafte Variation der Pulsleistung in Abhängigkeit von Schwellwerten der Geschwindigkeit denkbar. Weiterhin ist es möglich, die Pulsleistung durch eine Variation zeitlicher Größen, wie die Pulslänge und/oder die Pulswiederholrate, zu ändern. Weiterhin kann die Pulsleistung auch noch alternativ oder zusätzlich durch bestimmte Pulsfolgen, die eine beliebige Folge von unterschiedlichen Pulsamplituden aufweisen, variiert werden. Die Pulsleistung ist dann durch den Mittelwert der unterschiedlichen Pulsamplituden charakterisiert. Sollte das in Rede stehende Fahrerassistenzsystem schließlich aufgrund der geringen erreichten Geschwindigkeit keinen Nutzen mehr aufweisen, kann der Laser-Imager auch zweckmäßig abgeschaltet werden, um die Augensicherheit zu gewährleisten.

In einer weiteren vorteilhaften Variante kann, alternativ oder in Kombination mit den zuvor beschriebenen Maßnahmen, auch die Bildwiederholrate in Abhängigkeit von der Fahrzeuggeschwindigkeit verändert werden. So kann, bei abnehmender Geschwindigkeit, die Bildwiederholrate verringert werden. Bei zunehmender Geschwindigkeit kann die Bildwiederholrate wieder vergrößert werden. Weiterhin ist es denkbar, alternativ und/oder zusätzlich die Pulswiederholrate geschwindigkeitsabhängig zu variieren.

In einer Ausführungsvariante der Erfindung wird eine von einem Betriebsparameter des Fahrzeugs abhängige Veränderung des von dem abgelenkten Laserstrahl erfassten Blickfelds vorgenommen, indem gemäß der nachfolgenden Beziehung der Scanwinkel geschwindigkeitsabhängig variiert wird:

$$(3) \qquad \alpha = f\left(\vec{v}_{Eigen}\right),$$

mit

$$\alpha = \text{Scanwinkel}$$

$$\vec{v}_{Eigen} = \text{Fahrzeuggeschwindigkeit.}$$

So kann beispielsweise bei einer geringen Geschwindigkeit des Fahrzeugs, beispielsweise beim Einparken, das Blickfeld derart angepasst werden, dass das Fahrerassistenzsystem seine vorgesehene Funktion gerade noch erfüllt. Beispielsweise kann das Blickfeld mit abnehmender Geschwindigkeit des Fahrzeugs aufgeweitet werden, wodurch das Risiko einer Augenschädigung vermindert wird. Die Aufweitung des Blickfelds kann dabei eindimensional oder zweidimensional erfolgen. Weiterhin kann die Aufweitung stetig erfolgen oder auch stufenartig in Abhängigkeit von vorgegebenen Schwellwerten der Geschwindigkeit.

**Patentansprüche**

1. Verfahren für die Steuerung einer fahrzeuggebundenen Strahlungsquelle (1), bei dem die Strahlungsquelle pulsgesteuert wird und die von der Strahlungsquelle erzeugte Strahlung auf die Umgebung der Strahlungsquelle abgelenkt wird, um aus der reflektierten und/oder gestreuten Strahlung ein Bild der Umgebung zu erfassen, wobei mindestens ein Betriebsparameter der Strahlungsquelle in Abhängigkeit von mindestens einem Betriebsparameter des Fahrzeugs gesteuert wird;
**dadurch gekennzeichnet, dass**
die Strahlungsquelle ein Laser-Imager (1) ist, wodurch mit mindestens einem rasterförmig abgelenkten Laserstrahl die Umgebung punktförmig bestrahlbar ist; und
eine Ausdehnung eines vom Laser-Imager (1) erfassten Blickfeldes in Abhängigkeit von mindestens einem Betriebsparameter der Fahrzeugs verändert wird.

2. Verfahren nach Anspruch 1, **dadurch gekennzeichnet, dass** eine Pulsleistung des Laser-Imagers (1) in Abhängigkeit von der Geschwindigkeit des Fahrzeugs gesteuert wird.

3. Verfahren nach Anspruch 2, **dadurch gekennzeichnet, dass** die Pulsleistung mit zunehmender Geschwindigkeit erhöht wird.

4. Verfahren nach Anspruch 2, **dadurch gekennzeichnet, dass** die Pulsleistung mit abnehmender Geschwindigkeit reduziert wird.

5. Verfahren nach einem der Ansprüche 2 bis 4, **dadurch gekennzeichnet, dass** die Pulsleistung stetig variiert wird.

6. Verfahren nach einem der Ansprüche 2 bis 4, **dadurch gekennzeichnet, dass** die Pulsleistung stufenförmig, in Abhängigkeit von Schwellwerten eines Betriebsparameters des Fahrzeugs variiert wird.

7. Verfahren nach einem der vorhergehenden Ansprüche, **dadurch gekennzeichnet, dass**, eine Bildwiederholrate des von dem Laser-Imager (1) abgetasteten Blickfelds in Abhängigkeit von mindestens einem Betriebsparameter des Fahrzeugs variiert wird.

8. Verfahren nach Anspruch 7, **dadurch gekennzeichnet, dass** die Bildwiederholrate in Abhängigkeit von der Geschwindigkeit des Fahrzeugs variiert wird.

9. Verfahren nach einem der Ansprüche 7 oder 8, **dadurch gekennzeichnet, dass** die Bildwiederholrate stetig variiert wird.

10. Verfahren nach einem der Ansprüche 7 oder 8, **dadurch gekennzeichnet, dass** die Bildwiederholrate stufenförmig, in Abhängigkeit von Schwellwerten der Geschwindigkeit, variiert wird.

11. Verfahren nach einem der vorhergehenden Ansprüche, **dadurch gekennzeichnet, dass** eine Pulswiederholrate des Laser-Imagers stetig variiert wird.

12. Verfahren nach Anspruch 11, **dadurch gekennzeichnet, dass** die Pulswiederholrate stufenförmig, in Abhängigkeit von Schwellwerten der Geschwindigkeit, variiert wird.

13. Verfahren nach einem der vorhergehenden Ansprüche, **dadurch gekennzeichnet, dass** das die Ausdehnung des von dem Laser-Imager (1) erfassten Blickfelds geschwindigkeitsabhängig variiert wird.

14. Verfahren nach Anspruch 13, **dadurch gekennzeichnet, dass** die Ausdehnung des Blickfelds mit abnehmender Geschwindigkeit aufgeweitet wird.

15. Verfahren nach einem der vorhergehenden Ansprüche, **dadurch gekennzeichnet, dass** das Blickfeld in einer Dimension verändert wird.

16. Verfahren nach einem der vorhergehenden Ansprüche 1 bis 14, **dadurch gekennzeichnet, dass** das Blickfeld in zwei Dimensionen verändert wird.

17. Verfahren nach einem der vorhergehenden Ansprüche, **dadurch gekennzeichnet, dass** das Blickfeld des Laser-Imagers (1) auf die Anwesenheit von Personen überprüft wird und dass bei Detektion einer Person mindestens ein Betriebsparameter des Laser-Imagers (1) im Sinne einer Verbesserung der Augensicherheit verändert wird.

18. Vorrichtung für die Steuerung eines Laser-Imagers zur Durchführung des Verfahrens nach einem der Ansprüche 1 bis 17.

**Claims**

1. Method for controlling a vehicle-based radiation source (1), in which the radiation source is pulse controlled and the radiation generated by the radiation source is deflected to the area surrounding the radiation source so as to capture an image of the surrounding area from the reflected and/or scattered radiation, wherein at least one operating parameter of the radiation source is controlled in dependence on at least one operating parameter of the vehicle;
**characterized in that**
the radiation source is a laser imager (1), whereby at least one laser beam which is deflected in the manner of a raster can be used to irradiate the surrounding area in a point-type manner; and
an extent of a field of vision that is captured by the laser imager (1) is changed in dependence on at least one operating parameter of the vehicle.

2. Method according to Claim 1, **characterized in that** a pulse power of the laser imager (1) is controlled in dependence on the speed of the vehicle.

3. Method according to Claim 2, **characterized in that** the pulse power increases as the speed increases.

4. Method according to Claim 2, **characterized in that** the pulse power falls as the speed decreases.

5. Method according to one of Claims 2 to 4, **characterized in that** the pulse power is constantly varied.

6. Method according to one of Claims 2 to 4, **characterized in that** the pulse power is varied in the manner of steps in dependence on threshold values of an operating parameter of the vehicle.

7. Method according to one of the preceding claims, **characterized in that** an image repeat rate of the field of vision that is scanned by the laser imager (1) is varied in dependence on at least one operating parameter of the vehicle.

8. Method according to Claim 7, **characterized in that** the image repeat rate is varied in dependence on the speed of the vehicle.

9. Method according to one of Claims 7 or 8, **characterized in that** the image repeat rate is constantly varied.

10. Method according to one of Claims 7 or 8, **characterized in that** the image repeat rate is varied in the manner of steps in dependence on threshold values of the speed.

11. Method according to one of the preceding claims, **characterized in that** a pulse repeat rate of the laser image is constantly varied.

12. Method according to Claim 11, **characterized in that** the pulse repeat rate is varied in the manner of steps in dependence on threshold values of the speed.

13. Method according to one of the preceding claims, **characterized in that** the extent of the field of vision that is captured by the laser imager (1) is varied in dependence on the speed.

14. Method according to Claim 13, **characterized in that** the extent of the field of vision is widened as the speed decreases.

15. Method according to one of the preceding claims, **characterized in that** the field of vision is changed in one dimension.

16. Method according to one of the preceding claims 1 to 14, **characterized in that** the field of vision is changed in two dimensions.

17. Method according to one of the preceding claims, **characterized in that** the field of vision of the laser imager (1) is checked for the presence of people and **in that** at least one operating parameter of the laser imager (1) is changed with the intention of improving eye safety if a person is detected.

18. Apparatus for controlling a laser imager for carrying out the method according to one of Claims 1 to 17.


**Revendications**

1. Procédé de commande d'une source de rayonnement (1) rattachée à un véhicule, selon lequel la source de rayonnement est commandée par impulsion et le rayonnement généré par la source de rayonnement est dévié sur l'environnement de la source de rayonnement afin d'acquérir une image de l'environnement à partir du rayonnement réfléchi et/ou diffusé, au moins un paramètre de fonctionnement de la source de rayonnement étant commandé en fonction d'au moins un paramètre de fonctionnement du véhicule ;
**caractérisé en ce que**
la source de rayonnement est un imageur à laser (1) par le biais duquel l'environnement peut être irradié de manière ponctuelle avec au moins un rayon laser dévié en forme de grille ; et
une expansion d'un champ de vision capté par l'imageur à laser (1) est modifiée en fonction d'au moins un paramètre de fonctionnement du véhicule.

2. Procédé selon la revendication 1, **caractérisé en ce qu'**une puissance d'impulsion de l'imageur à laser (1) est commandée en fonction de la vitesse du véhicule.

3. Procédé selon la revendication 2, **caractérisé en ce que** la puissance d'impulsion est augmentée à mesure que la vitesse s'accroît.

**4.** Procédé selon la revendication 2, **caractérisé en ce que** la puissance d'impulsion est réduite à mesure que la vitesse diminue.

**5.** Procédé selon l'une des revendications 2 à 4, **caractérisé en ce que** la puissance d'impulsion subit une variation constante.

**6.** Procédé selon l'une des revendications 2 à 4, **caractérisé en ce que** la puissance d'impulsion subit une variation par paliers en fonction de valeurs de seuil d'un paramètre de fonctionnement du véhicule.

**7.** Procédé selon l'une des revendications précédentes, **caractérisé en ce qu'**un taux de rafraîchissement d'image du champ de vision balayé par l'imageur à laser (1) subit une variation en fonction d'au moins un paramètre de fonctionnement du véhicule.

**8.** Procédé selon la revendication 7, **caractérisé en ce que** le taux de rafraîchissement d'image subit une variation en fonction de la vitesse du véhicule.

**9.** Procédé selon la revendication 7 ou 8, **caractérisé en ce que** le taux de rafraîchissement d'image subit une variation constante.

**10.** Procédé selon la revendication 7 ou 8, **caractérisé en ce que** le taux de rafraîchissement d'image subit une variation par paliers en fonction de valeurs de seuil de la vitesse.

**11.** Procédé selon l'une des revendications précédentes, **caractérisé en ce qu'**un taux de répétition des impulsions de l'imageur à laser subit une variation constante.

**12.** Procédé selon la revendication 11, **caractérisé en ce que** le taux de répétition des impulsions subit une variation par paliers en fonction de valeurs de seuil de la vitesse.

**13.** Procédé selon l'une des revendications précédentes, **caractérisé en ce que** l'expansion du champ de vision capté par l'imageur à laser (1) subit une variation en fonction de la vitesse.

**14.** Procédé selon la revendication 13, **caractérisé en ce que** l'expansion du champ de vision est élargie lorsque la vitesse diminue.

**15.** Procédé selon l'une des revendications précédentes, **caractérisé en ce que** le champ de vision est modifié dans une dimension.

**16.** Procédé selon l'une des revendications 1 à 14, **caractérisé en ce que** le champ de vision est modifié dans deux dimensions.

**17.** Procédé selon l'une des revendications précédentes, **caractérisé en ce que** la présence de personnes est vérifiée dans le champ de vision de l'imageur à laser (1) et **en ce qu'**en cas de détection d'une personne, au moins un paramètre de fonctionnement de l'imageur à laser (1) est modifié dans le sens d'une amélioration de la sécurité des yeux.

**18.** Dispositif pour la commande d'un imageur à laser destiné à mettre en oeuvre le procédé selon l'une des revendications 1 à 17.

**Fig. 1**

1.4    1.5

1

$d_{Mess}$

1.1    1.2

1.3

**Fig. 2**

$t_{Zeile}$

1.5

$t_{Bild}$

$t_{Auge}$

$t_{Zeile}$

$\Phi_{Blende}$

0                                          $t_{Bild}$                    t [ms]

## Fig. 3

$t_{Auge}$

$\Phi_{Blende}$

0        $t_{Zeile}$        $2t_{Zeile}$        $3t_{Zeile}$        t [µs]

## Fig. 4

$t_{Periode}$

$t_{Puls}$

$\Phi_{Blende}$

0                                    $t_{Auge}$                    t [ns]

## Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19707936 A1
- WO 2005029125 A1
- EP 1704072 B1